# FASCICULE DE BREVET EUROPEEN

(11) **EP 2 691 778 B1**
(45) Date de publication et mention de la délivrance du brevet: **22.04.2015**
(21) Numéro de dépôt: 12710918.9
(22) Date de dépôt: 21.03.2012
(51) Int. Cl.: G01P 5/16, B01D 45/00, G01P 5/165

(54) **DISPOSITIF D'ENTRETIEN ET D'ANALYSE DE SONDE AERODYNAMIQUE**
VORRICHTUNG ZUR INSTANDHALTUNG UND UNTERSUCHUNG EINER AERODYNAMISCHEN SONDE
DEVICE FOR MAINTAINING AND ANALYZING AN AERODYNAMIC PROBE

(30) Priorité: 31.03.2011 FR 1100955
(43) Date de publication de la demande: 05.02.2014
(73) Titulaire: THALES, 92200 Neuilly-sur-Seine (FR)
(72) Inventeur: BARBOU, Jean-Jacques, F-41210 La Ferte Beauharnais (FR); MANDLE, Jacques, F-07130 Saint Peray (FR)
(74) Mandataire: Collet, Alain
(86) Numéro de dépôt international: PCT/EP2012/054930
(87) Numéro de publication internationale: WO 2012/130669

(56) Documents cités:
- US-A- 3 926 594
- US-A- 4 645 517
- US-A1- 2004 093 953

## Description

L'invention concerne un dispositif d'entretien et d'analyse de sonde aérodynamique.

Le pilotage de tout aéronef nécessite de connaître sa vitesse relative par rapport à l'air, c'est-à-dire au vent relatif. Cette vitesse est déterminée à l'aide de capteurs de la pression statique Ps, de la pression totale Pt, de l'angle d'incidence α et de l'angle de dérapage β. α et β fournissent la direction du vecteur de vitesse dans un système de référence, ou référentiel, lié à l'aéronef et Pt - Ps fournit une information liée au module de ce vecteur vitesse. En fait Pt-Ps donne une information de vitesse dite conventionnelle, critique pour le pilotage, car indiquant la présence ou non dans un domaine de vol sûr. Les quatre paramètres aérodynamiques permettent donc de déterminer le vecteur vitesse d'un avion et, accessoirement, d'un aéronef à rotor dit hélicoptère, et à rotor basculant dit convertible.

La mesure de la pression totale Pt se fait habituellement en mesurant la pression d'arrêt de l'écoulement à l'aide d'un tube dit de Pitot. Il s'agit d'un tube ouvert à l'une de ses extrémités et obstrué à l'autre. L'extrémité ouverte du tube fait sensiblement face à l'écoulement.

A l'intérieur du tube de Pitot, au voisinage de l'extrémité obstruée, on dispose d'un orifice connecté à un moyen de mesure de la pression d'air qui y règne. Le filet d'air pénétrant dans le tube par l'extrémité ouverte du tube est progressivement ralenti jusqu'à atteindre une vitesse nulle dans le tube. Le ralentissement de la vitesse de l'air tend à augmenter la pression de l'air. Cette pression augmentée forme la pression totale Pt de l'écoulement d'air.

En pratique, l'écoulement d'air peut véhiculer des liquides ou des particules solides susceptibles de pénétrer dans le tube de Pitot et de s'accumuler dans le tube au niveau de l'extrémité obstruée. Pour éviter que l'accumulation de liquide ne vienne perturber la mesure de pression, on prévoit en général au niveau de l'extrémité obstruée, un trou de drainage par lequel les éventuels liquides peuvent s'évacuer.

Dans ce trou, circulent aussi à la fois les particules solides et une partie de l'air entrée dans le tube de Pitot. Ainsi, le ralentissement de l'air dans le tube n'est pas complet et la mesure de pression totale Pt s'en trouve altérée. Plus précisément, plus on cherche à éviter l'accumulation de particules de taille importante ou de quantité de liquide, plus on altère la mesure de pression totale en augmentant les dimensions du trou de drainage. Inversement, plus on cherche à améliorer la mesure de pression totale Pt en diminuant les dimensions du trou de drainage, plus le risque d'accumulation de particules solides ou de congestion par le liquide augmente. Avec un tube de Pitot, on est donc tenu de réaliser un compromis entre qualité de la mesure de pression totale Pt et risque de perturbation de la mesure du fait de particules véhiculées par l'écoulement d'air où la mesure est réalisée.

La mesure de la pression statique Ps se fait habituellement au moyen de cavités débouchant dans l'écoulement par un orifice situé sensiblement perpendiculairement à l'écoulement. On dispose dans la cavité un orifice connecté à un moyen de mesure de la pression d'air qui y règne. Cette pression forme la pression statique Ps de l'écoulement. Certains tubes de Pitot peuvent être équipés de prises de pression statique disposées sur leurs cotés. Ce type de sonde aérodynamique est encore appelée Sonde Pitot-statique.

Actuellement, si les trous de drainage des sondes embarquées sur aéronefs sont obstrués, ou si des particules de sable ou de cendre volcaniques sont présentes dans le tube lui même, la sonde est démontée, puis nettoyée à l'eau savonneuse. Le changement de sonde nécessite de vérifier l'étanchéité de la chaine pneumatique, ce qui rend l'opération relativement longue, de l'ordre de trente à cinquante minutes pour un aéronef.

L'invention propose un dispositif d'entretien permettant le nettoyage de sonde aérodynamiques directement sur l'aéronef sans démontage de celle-ci, et sans risque de détérioration des capteurs de pression connectés par surpression.

A cet effet, l'invention a pour objet un dispositif d'entretien et d'analyse de sonde aérodynamique de type à pression d'arrêt destinée à équiper un aéronef, caractérisé en ce qu'il comprend un canal dont une première extrémité est destinée à pénétrer dans la sonde, des moyens pour créer dans le canal une dépression d'air par rapport à la pression ambiante et des moyens de récupération d'éventuelles particules aspirées dans le canal.

L'invention sera mieux comprise et d'autres avantages apparaîtront à la lecture de la description détaillée d'un mode de réalisation donné à titre d'exemple, description illustrée par le dessin joint dans lequel :
la figure 1 représente un exemple de sonde aérodynamique pour laquelle on peut mettre en oeuvre l'invention ;
la figure 2 représente un exemple de dispositif d'entretien conforme à l'invention ;
les figures 3a et 3b représentent plus en détail une partie du dispositif d'entretien représenté sur la figure 2.

Par souci de clarté, les mêmes éléments porteront les mêmes repères dans les différentes figures.

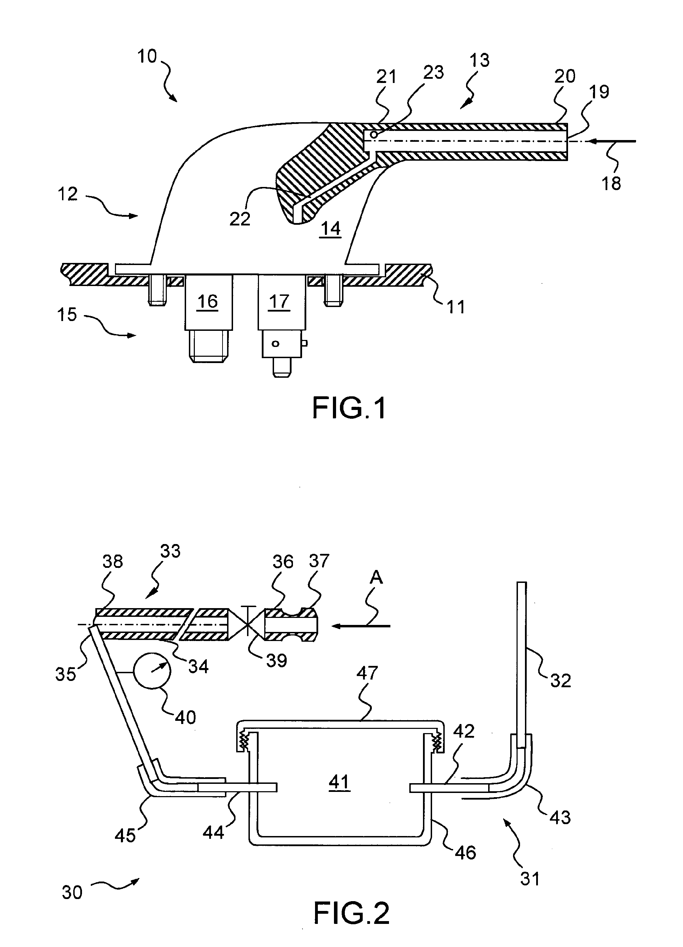

La figure 1 représente une sonde de mesure de pression totale 10 destinée à être fixée en traversée d'une ouverture réalisée dans la peau 11 d'un aéronef. La sonde 10 comprend une partie externe 12 à la peau 11 et formée par un tube de Pitot 13 porté par un mât 14. La sonde 10 comprend également une partie interne 15 comportant essentiellement un connecteur électrique 16 et un connecteur pneumatique 17 permettant le raccordement pneumatique du tube de Pitot 13 à un capteur de pression situé à l'intérieur de la peau 11 de l'aéronef. La sonde 10 est positionnée sur la peau 11 de l'aéronef de telle sorte que le tube de Pitot 13 soit orienté sensiblement suivant un axe longitudinal de l'aéronef, hors couche limite, pour que la direction de l'écoulement, matérialisé par une flèche 18, fasse sensiblement face à un orifice d'entrée 19 situé à une première extrémité 20 du tube de Pitot 13.

Une seconde extrémité 21 du tube de Pitot 13, opposée à l'extrémité 20, est fermée de façon à former un point d'arrêt dans le filet d'air prélevé dans l'écoulement et pénétrant dans le tube de Pitot 13 par son orifice 19. Au niveau de l'extrémité 21 du tube de Pitot 13, un canal pneumatique 22, s'ouvre dans le tube de Pitot 13 pour y former une prise de pression au niveau de laquelle on cherche à mesurer la pression d'air. Le canal pneumatique 22 est par exemple relié à un capteur de pression ou à un autre dispositif de mesure de pression. Le capteur de pression permet de mesurer de façon effective la pression de l'air régnant à l'intérieur du tube de Pitot 13 au niveau de son extrémité 21. Le capteur de pression peut appartenir à la sonde 10 ou bien être déporté. Dans ce cas, le capteur de pression est raccordé à la sonde 10 au moyen du connecteur pneumatique 17.

A l'extrémité 21, le tube de Pitot 13 comporte un ou plusieurs trous de drainage 23 permettant d'évacuer le liquide susceptible de pénétrer à l'intérieur du tube de Pitot 13. Hormis le ou les trous de drainage 23, dont la section est faible par rapport à celle du tube de Pitot 13, celui-ci étant fermé au niveau de son extrémité 21, la pression mesurée au niveau de cette extrémité représente donc sensiblement la pression totale Pt de l'écoulement d'air.

Le connecteur électrique 16 permet de raccorder électriquement la sonde 10 au réseau électrique de l'aéronef, notamment pour raccorder des moyens de réchauffage de l'ensemble de la sonde 10. Ces moyens de réchauffage comprennent par exemple une résistance chauffante, non représentée sur la figure 1, et permettant le réchauffage du mât 14 et du tube de Pitot 13 sur toute sa longueur pour éviter que de l'accumulation de glace ne se forme sur la sonde.

Dans l'exemple représenté, le tube de Pitot 13 est fixe par rapport à la peau 11 de l'aéronef. Il est bien entendu possible de monter le tube de Pitot 13 sur un mat mobile comme une palette pouvant s'orienter dans l'axe de l'écoulement, comme par exemple décrit dans le brevet publié sous le n° FR 2 665 539 et déposé le 3 août 1990. Ainsi lorsque l'incidence locale de l'écoulement au voisinage de la sonde 10 évolue, l'orientation du tube de Pitot 13 suit cette incidence afin de toujours faire face à l'écoulement. La mesure de pression totale Pt s'en trouve améliorée lors de variation d'incidence locale.

Il est également possible de compléter la mesure de pression totale par une mesure de pression statique. A cet effet, il est possible de disposer une ou plusieurs prises de pression statique sur une face externe du tube de Pitot 13 et de raccorder ces prises de pression à des capteurs de pression au moyen de canaux transitant par le connecteur pneumatique 17.

Au niveau de l'extrémité 21, le tube de Pitot 13 comprend généralement un piège à eau, non représenté, et permettant de bloquer le liquide susceptible de pénétrer dans le tube de Pitot 13, et de l'évacuer par le trou de purge associé. Ce piège à eau permet d'éviter que le liquide ingéré ne pénètre dans le canal 22. Dans le fonctionnement normal du tube, l'eau ainsi piégée est évacuée du tube de Pitot 13 par les trous de drainage 23. Lorsque l'aéronef vole, des particules solides, comme du sable ou de la poussière volcanique, peuvent également pénétrer dans le tube de Pitot 13. Ces particules s'accumulent aussi au fond du tube, au niveau de l'extrémité 21 et notamment dans le piège à eau. Ces particules peuvent ne pas pouvoir être évacuées par les trous de drainage 23 et les boucher ou stagner dans le piège à eau.

La figure 2 représente un exemple de dispositif d'entretien 30 permettant de nettoyer la sonde 10 de ses particules sans nécessiter de démontage de celle-ci.

Le dispositif d'entretien 30 comprend un canal 31 dont une première extrémité 32 est destinée à pénétrer dans la sonde 10 pour aspirer d'éventuelles particules s'y trouvant. L'extrémité 32 est par exemple réalisée en matière souple comme par exemple une matière plastique pour ne pas blesser l'intérieur de la sonde.

Le dispositif d'entretien 30 est extérieur à la sonde 10. Il est mis en oeuvre par du personnel d'entretien lors d'escales de l'aéronef. Le dispositif d'entretien 30 est un outillage qui n'est pas utilisé en vol. Plus précisément, le personnel d'entretien, muni du dispositif 30, s'approche d'une sonde 10, fait pénétrer la première extrémité 32 dans la sonde pour y effectuer une opération d'aspiration puis retire la première extrémité 32.

Le dispositif d'entretien 30 comprend également des moyens 33 pour créer dans le canal 31 une dépression d'air par rapport à la pression ambiante. Il est important que ce soit une dépression, afin d'éviter les surpressions qui pourraient endommager le capteur de pression associé. Il est possible de créer cette dépression au moyen d'une pompe actionnée par un moteur électrique. Néanmoins, lors des escales d'aéronefs, il est quelques fois difficile de trouver une source d'alimentation électrique au voisinage des points de stationnement d'aéronefs. On trouve plus facilement une source d'air comprimé mise à la disposition des équipes au sol pour l'entretien des aéronefs. Cette source d'air comprimé, ou plus généralement une source de gaz inerte sous pression est avantageusement mise en oeuvre pour générer la dépression d'air dans le canal 31. A cet effet, les moyens 33 comprennent un éjecteur 34 destiné à être raccordé à une source de gaz sous pression et éjectant le gaz à proximité d'une seconde extrémité 35 du canal 31 afin d'entraîner l'air présent dans le canal 31. La vitesse d'éjection du gaz en sortie de l'éjecteur 34 aspire l'air contenu dans le canal 31.

L'éjecteur 34 est formé d'un tube raccordé à une première de ses extrémités 36 à la source de gaz sous pression. A cet effet, l'éjecteur 34 peut être muni d'un connecteur pneumatique à verrouillage rapide 37. L'éjecteur 34 est ouvert sur l'extérieur à sa deuxième extrémité 38 créant ainsi une circulation du gaz dans l'éjecteur 34. Le sens de cette circulation est matérialisé par une flèche A. Un clapet 39 peut être mis en place dans l'éjecteur 34 en aval du connecteur pneumatique 37 pour permettre à un opérateur de commander la circulation du gaz dans l'éjecteur 34 en fonction du besoin. Le clapet 39 peut fonctionner en tout ou rien afin d'autoriser ou non la circulation de gaz dans l'éjecteur 34 ou encore en proportionnel afin de maitriser la vitesse du gaz dans l'éjecteur 34. On peut prévoir un capteur de pression 40 dans le canal 31 afin de connaitre la valeur de la dépression dans le canal 31. Plus généralement, le dispositif d'entretien 30 comprend des moyens de mesure et d'affichage de la dépression régnant dans le canal 31. Un opérateur peur régler cette dépression en agissant sur le clapet 39.

Le dispositif d'entretien 30 comprend en outre des moyens de récupération d'éventuelles particules aspirées dans le canal 31. Ces moyens comprennent avantageusement un récipient fermé 41 disposé en coupure du canal 31 entre ces deux extrémités 32 et 35. Plus précisément le canal 31 comprend un premier embout formant l'extrémité 32 et un deuxième embout 42 débouchant dans le récipient 41. Les deux embouts 32 et 42 sont disposés en amont du récipient 41 dans le sens de circulation de l'air aspiré dans le canal 31. Les embouts 32 et 42 peuvent être raccordés au moyen d'un joint 43 plus souple que les deux embouts 32 et 42 eux-mêmes. Ceci permet de faciliter la manipulation du dispositif d'entretien 30 et notamment l'entrée de l'embout 32 à l'intérieur du tube de Pitot 13. Il est bien entendu possible de réaliser les deux embouts 32 et 42 dans un seul tube. De plus, le canal 31 comprend un troisième embout formant l'extrémité 35 et un quatrième embout 44 débouchant dans le récipient 41. Les deux embouts 35 et 44 sont disposés en aval du récipient 41. Comme précédemment, les embouts 35 et 44 peuvent être raccordés au moyen d'un joint 45. Les embouts 42 et 45 débouchent dans le récipient 41 à distance l'un de l'autre de sorte que la vitesse de l'air dans le récipient soit très inférieure à celle de l'air circulant dans le canal 31. Cette différence de vitesse permet à d'éventuelles particules circulant dans les embouts 32 et 42 de se déposer dans le fond du récipient 41 sans poursuivre leur cheminement dans les embouts 35 et 44 situés en aval du récipient 41.

Avantageusement, le récipient 41 comprend au moins une paroi transparente 46 permettant à l'opérateur de visualiser les particules présentes dans le récipient 41.

Avantageusement, le récipient 41 comprend une paroi démontable 47 permettant d'ôter les particules piégées du récipient 41. Les particules récupérées peuvent être simplement éliminées ou analysées pour en déterminer la nature. La paroi démontable 47 peut être formée par un couvercle que l'on peut visser sur un corps du récipient 41 formant la paroi 46. Le couvercle 47 ainsi que les embouts 42 et 44 sont raccordés au récipient 41 de manière suffisamment étanche de façon à conserver une dépression sensiblement constante tout au long du canal 31.

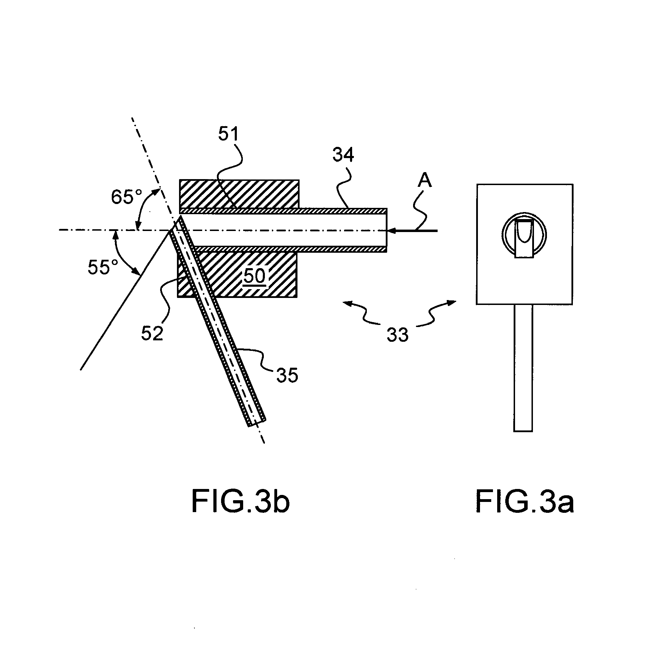

Les figures 3a et 3b représentent un exemple de réalisation des moyens 33 pour créer dans le canal 31 une dépression d'air et notamment la disposition relative de l'éjecteur 34 et de l'embout 35. L'éjecteur 34 est formé par un tube rectiligne de 6mm de diamètre intérieur et de 7mm de diamètre extérieur. L'embout 35 est formé par un tube rectiligne de 2mm de diamètre intérieur et de 3mm de diamètre extérieur. Un pavé 50 permet de fixer la position relative de l'embout 35 par rapport à l'éjecteur 34. Le pavé 50 est percé de deux trous 51 et 52 traversant, permettant de recevoir chacun l'un des deux tubes formant respectivement l'éjecteur 34 et l'embout 35. Les deux éléments 43 et 35 sont ajustés dans le pavé 50 et par exemple fixés par collage, brasage ou soudure dans les trous 51 et 52 correspondants.

La figure 3a est une vue de face des moyens 33 pour créer dans le canal 31 une dépression d'air et la figure 3b est une vue en coupe dans un plan perpendiculaire à celui de la figure 3a. Les deux trous 51 et 52 sont concourants et les axes respectifs s'étendent dans le plan de la figure 3b. Dans l'exemple représenté, les deux axes font un angle d'environ 65° entre eux. De plus l'extrémité de l'embout 35 est biseautée à environ 55° par rapport à l'axe de l'embout 35 et débouche dans l'éjecteur 34. Les gaz expulsés par l'éjecteur 35 circulent en entourant l'ouverture de l'embout 35 et y créent une dépression.

## Revendications

1. Dispositif d'entretien et d'analyse de sonde aérodynamique (10) de type à pression d'arrêt destinée à équiper un aéronef, **caractérisé en ce qu'**il comprend un canal (31) dont une première extrémité (32) est destinée à pénétrer dans la sonde (10), des moyens (33) pour créer dans le canal (31) une dépression d'air par rapport à la pression ambiante et des moyens de récupération (41) d'éventuelles particules aspirées dans le canal (31).

2. Dispositif selon la revendication 1, **caractérisé en ce que** les moyens (33) pour créer une dépression comprennent un éjecteur (34) destiné à être raccordé à une source de gaz sous pression et éjectant le gaz à proximité d'une seconde extrémité (35) du canal (31) afin d'entraîner l'air présent dans le canal (31).

3. Dispositif selon l'une des revendications précédentes, **caractérisé en ce que** les moyens de récupération comprennent un récipient (41) fermé disposé en coupure du canal (31).

4. Dispositif selon la revendication 3, **caractérisé en ce que** le récipient (41) comprend au moins une paroi transparente (46).

5. Dispositif selon l'une quelconques des revendications 3 ou 4, **caractérisé en ce que** le récipient (41) comprend une paroi démontable (47).

6. Dispositif selon l'une des revendications précédentes, **caractérisé en ce qu'**il comprend des moyens (40) de mesure et d'affichage de la dépression régnant dans le canal (31).

7. Dispositif selon l'une des revendications précédentes, **caractérisé en ce que** le canal (31), au niveau de sa première extrémité (32), est formé dans un matériau souple.

## Patentansprüche

1. Vorrichtung zum Warten und Analysieren einer aerodynamischen Sonde (10) des Abschaltdrucktyps, bestimmt zur Installation in einem Flugzeug, **dadurch gekennzeichnet, dass** sie einen Kanal (31) umfasst, dessen erstes Ende (32) zum Eindringen in die Sonde (10) bestimmt ist, Mittel (33), um in dem Kanal (31) einen Unterdruck in Bezug auf den Umgebungsdruck zu erzeugen, und Mittel (41) zum Zurückgewinnen von eventuellen in dem Kanal (31) angesaugten Partikeln.

2. Vorrichtung nach Anspruch 1, **dadurch gekennzeichnet, dass** die Mittel (33) zum Erzeugen eines Unterdrucks einen Ejektor (34) zum Anschließen an eine Druckgasquelle und zum Ausstoßen des Gases in der Nähe eines zweiten Endes (35) des Kanals (31) umfassen, um die in dem Kanal (31) vorhandene Luft mitzuführen.

3. Vorrichtung nach einem der vorherigen Ansprüche, **dadurch gekennzeichnet, dass** die Rückgewinnungsmittel einen zwischen den Kanal (31) montierten geschlossenen Empfänger (41) umfassen.

4. Vorrichtung nach Anspruch 3, **dadurch gekennzeichnet, dass** der Empfänger (41) wenigstens eine transparente Wand (46) umfasst.

5. Vorrichtung nach Anspruch 3 oder 4, **dadurch gekennzeichnet, dass** der Empfänger (41) eine demontierbare Wand (47) umfasst.

6. Vorrichtung nach einem der vorherigen Ansprüche, **dadurch gekennzeichnet, dass** sie Mittel (40) zum Messen und Anzeigen des im Kanal (31) vorherrschenden Unterdrucks umfasst.

7. Vorrichtung nach einem der vorherigen Ansprüche, **dadurch gekennzeichnet, dass** der Kanal (31) an seinem ersten Ende (32) aus einem elastischen Material gebildet ist.

## Claims

1. A device for maintaining and analyzing an aerodynamic probe (10) of stagnation pressure type intended to be installed in an aircraft, **characterized in that** it comprises a channel (31) with a first end (32) that is intended to penetrate into the probe (10), means (33) for creating in the channel (31) an air depression relative to the ambient pressure and means (41) for recovering any particles sucked into the channel (31).

2. The device as claimed in claim 1, **characterized in that** the means (33) for creating a depression comprise an ejector (34) intended to be coupled to a pressurized gas source and ejecting the gas in proximity to a second end (35) of the channel (31) in order to drive the air present in the channel (31).

3. The device as claimed in one of the preceding claims, **characterized in that** the recovery means comprise a closed vessel (41) positioned in the line of the channel (31)

4. The device as claimed in claim 3, **characterized in that** the vessel (41) comprises at least one transparent wall (46).

5. The device as claimed in any one of claims 3 or 4, **characterized in that** the vessel (41) comprises a removable wall (47).

6. The device as claimed in one of the preceding claims, **characterized in that** it comprises means (40) for measuring and displaying the depression prevailing in the channel (31).

7. The device as claimed in one of the preceding claims, **characterized in that** the channel (31), at its first end (32), is formed from a flexible material.
